# EUROPÄISCHE PATENTANMELDUNG

(11) **EP 1 179 865 A2**
(43) Veröffentlichungstag der Anmeldung: **13.02.2002**
(21) Anmeldenummer: 01119185.5
(22) Anmeldetag: 09.08.2001
(51) Int. Cl.: H01M 2/20, H01M 2/10

(54) **Elektrische Steckverbindung für tragbare elektrische Energiespeicher**

(30) Priorität: 12.08.2000 DE 10039498; 08.02.2001 DE 10105740
(71) Anmelder: Kress, Werner, D-89077 Ulm (DE)
(72) Erfinder: Kress, Werner, D-89077 Ulm (DE)
(74) Vertreter: Patentanwälte Ruff, Wilhelm, Beier, Dauster & Partner

(57) **Zusammenfassung**

Die Erfindung betrifft eine elektrische Steckverbindung für tragbare elektrische Energiespeicher, wie sie insbesondere für Energiespeicher von Haushalts- und Gartengeräten Verwendung finden können.

Daher ist es Aufgabe der Erfindung, die Steckverbindung für derartige tragbare elektrische Energiespeicher dahingehend zu verbessern, daß eine verbesserte Kontaktierung auch unter Belastung erzeugt wird.

Die elektrische Steckverbindung für tragbare elektrische Energiespeicher, wie sie insbesondere bei Haushalts- und Gartengeräten Verwendung finden kann, ist an einem Energiespeicher ausgebildet, dessen Gehäuse Schmalseiten aufweist. Dabei ist an einer Schmalseite Steckeraufnahme zur Aufnahme eines Steckers ausgebildet. Der Stecker ist in einer Kontaktstellung bezüglich dem Gehäuse festlegbar.

## Beschreibung

Die Erfindung betrifft eine elektrische Steckverbindung für tragbare elektrische Energiespeicher, wie sie insbesondere für Energiespeicher von Haushalts- und Gartengeräten Verwendung finden können.

Ein derartiger tragbarer elektrischer Energiespeicher ist beispielsweise aus der EP 0 310 717 A1 bekannt. Bei der dort beschriebenen Anordnung weist der Energiespeicher eine Gerätevorderseite und eine Geräterückseite auf, wobei zumindest die Geräterückseite zur Verbesserung des Tragekomforts gewölbt ausgebildet ist, um sich an die Körperform des Benutzers anzupassen. Die Gerätevorderseite und die Geräterückseite sind über Schmalseiten miteinander verbunden. Desweiteren ist noch eine Geräteoberseite und eine Geräteunterseite ausgebildet. Damit an dem Energiespeicher elektrische Verbraucher angeschlossen werden können, ist eine Steckbuchse vorgesehen. Die Steckbuchse ist entsprechend einer Zigarettenanzünderbuchse, wie sie beispielsweise aus Kraftfahrzeugen bekannt ist, ausgebildet. Ein entsprechend ausgebildeter Stecker, der über ein Kabel mit dem elektrischen Verbraucher verbunden ist, ist in die Steckbuchse senkrecht zur Schmalseite des Gerätes einführbar.

Nachteilig ist es bei einer solchen Ausführung des Steckkontaktes, daß auf das zum elektrischen Verbraucher führende Kabel Zugkräfte einwirken können, die bei einer zur Schmalseite des Gehäuses senkrechten Anordnung der Steckbuchse dazu führen können, daß die elektrische Kontaktierung vorübergehend gestört wird (Wackelkontakt) oder aber komplett unterbrochen wird. Darüber hinaus wirken sich die Zugkräfte in dieser Richtung auch auf die Kontaktierung des Kabels im Stecker selbst negativ aus.

Daher ist es Aufgabe der Erfindung, die Steckverbindung für derartige tragbare elektrische Energiespeicher dahingehend zu verbessern, daß eine verbesserte Kontaktierung auch unter Belastung erzeugt wird.

Diese Aufgabe der Erfindung wird durch die Ausbildung der Steckverbindung gemäß dem Anspruch 1 gelöst. Die abhängigen Ansprüche enthalten vorteilhafte Ausgestaltungen und Weiterbildungen der Erfindung.

Die elektrische Steckverbindung für tragbare elektrische Energiespeicher, wie sie insbesondere bei Haushalts- und Gartengeräten Verwendung finden kann, ist an einem Energiespeicher ausgebildet, dessen Gehäuse Schmalseiten aufweist. Dabei ist an einer Schmalseite eine Steckeraufnahme zur Aufnahme eines Steckers ausgebildet. Der Stecker ist in einer Kontaktstellung bezüglich dem Gehäuse festlegbar. Dabei sind seitens der Steckeraufnahme Kontaktflächen zur elektrischen Kontaktierung des Energiespeichers mit dem Stecker ausgebildet, während steckerseitig entsprechende Gegenkontakte zur Herstellung dieser elektrischen Verbindung mit dem Endverbraucher ausgebildet sind. Hierzu weist die Steckeraufnahme an der Schmalseite des Gehäuses des Energiespeichers vertikal ausgerichtete Führungsmittel auf. An dem Stecker sind den Führungsmitteln negativ entsprechende Greifmittel ausgebildet und der Stecker ist dadurch in einer Kontaktstellung bezüglich dem Gehäuse an den Führungsmitteln festlegbar. Hierzu sind die Kontaktflächen auf Seiten der Steckeraufnahme im Bereich der Führungsmittel angeordnet, während am Stecker die Gegenkontakte in entsprechender Lage ausgebildet sind, so daß dann, wenn der Stecker in der Kontaktstellung am Gehäuse festgelegt ist, die Gegenkontakte elektrisch mit den Kontaktflächen kontaktiert sind.

Die darin durchgegebene vertikale Ausrichtung für die Herstellung der Steckverbindung sorgt dafür, daß Kräfte, die senkrecht zur Schmalseite des Gehäuses wirken, die elektrische Kontaktierung nicht beeinträchtigen und damit auch keinen Einfluß auf den Übergangswiderstand ausüben. Damit wird im wesentlichen die Gefahr des Entstehens von Wackelkontakten vermieden.

Gemäß vorteilhafter Ausgestaltung der Erfindung ist für das Herstellen der Kontaktstellen des Steckers an dem Gehäuse eine Relativbewegung zwischen Gehäuse und Stecker erforderlich. Während wenigstens einen Teilweg dieser Relativbewegung gleiten die Gegenkontakte über die Kontaktflächen. Dadurch wird bei der Herstellung der Kontaktstellung des Steckers am Gehäuse, also bei der Herstellung der elektrischen Verbindung zwischen dem Stecker und dem Energiespeicher (sogenannter Batteriepack) eine aneinander schleifende Bewegung der miteinander zu kontaktierenden Kontaktelemente, der Kontaktfläche mit der entsprechenden Gegenfläche, erzeugt. Dies ist insbesondere für den bevorzugten Anwendungsfall, dem Betrieb von handtragbaren, elektrischen Geräten, insbesondere von Haushalts- und Gartengeräten, ein wesentlicher Vorteil. Eine eventuelle Verschmutzung der Kontakte, wie sie insbesondere bei den Steckern an nicht häufig benutzten Geräten zu befürchten ist, wird bei der Relativbewegung zur Herstellung der elektrischen Kontaktierung beseitigt und damit eine gute elektrische Kontaktierung hergestellt.

Dabei kann es insbesondere für die Herstellung der elektrischen Kontaktierung, aber auch für die Beseitigung von Verschmutzungen an den Kontaktelementen von Vorteil sein, wenn wenigstens eines der beiden Elemente Kontaktfläche, Gegenkontakt als Kontaktfeder ausgebildet ist.

Gemäß weiter bevorzugter Ausgestaltung der Erfindung ist die Relativbewegung wenigstens näherungsweise parallel zur Längsachse der Schmalseite, also parallel zur Fläche, ausgerichtet. Die Herstellung der elektrischen Verbindung erfolgt dann dadurch, daß der mit dem Gerätekabel verbundene Stecker parallel zu der Fläche der Gehäuseschmalseite insbesondere von oben nach unten auf eine passend geformte Steckeraufnahme aufgeschoben wird und dadurch besonders platzsparend an dem Gehäuse des Energiespeichers anliegt und insbesondere nicht senkrecht von einer Gehäusefläche des Energiespeichers absteht.

Weiterhin ist es vorteilhaft, wenn die Führungsmittel als beidseitig der Kontaktflächen, insbesondere parallel zu diesen verlaufende Führungsnute ausgebildet sind. Vorzugsweise sind die Nuten an einer von der Schmalseite abragenden Seitenwand ausgebildet. Greifmittel sind am Stecker ausgebildet. Diese Greifmittel hintergreifen die Führungsnut und sind parallel zu den Gegenkontakten ausgerichtet. Gemäß bevorzugter Ausgestaltung wird die Steckverbindung zwischen Stecker und Steckeraufnahme durch Kraftschluß aufrecht erhalten. Diese Maßnahme hat den Vorteil, daß der Stecker ohne zusätzliche Arretierung am Speichergehäuse aufsteckbar ist. Dies ist eine besonders einfache und kostengünstige Ausgestaltung der Erfindung. Dabei erfolgt das Einführen des Steckers in die Steckeraufnahme vorzugsweise durch eine von oben nach unten, also von der Gehäuseoberseite in Richtung auf die Gehäuseunterseite hin, erfolgende Bewegung in der Ebene der Schmalseite.

Gemäß einer vorteilhaften Ausgestaltung der Erfindung ist das von dem Stecker zu dem elektrischen Verbraucher führende Kabel in der Richtung aus dem Stecker herausgeführt, in der zum Herstellen der Steckverbindung zwischen Stecker und Steckeraufnahme der Stecker in die Steckeraufnahme einzuführen ist. Dadurch wird verhindert, daß zum Lösen der Steckverbindung zwischen Stecker und Steckeraufnahme eine Zugkraft am Kabel eingeleitet wird. Gemäß weiterführender Ausgestaltung der Erfindung sind die Kontaktflächen der Steckverbindung bei nicht eingeführtem Stecker nach außen hin freiliegend, insbesondere frei zugänglich ausgebildet. Alternativ oder ergänzend hierzu ist der Stecker so ausgebildet, daß bei nicht hergestellter Steckverbindung die Gegenkontakte freiliegend, insbesondere frei zugänglich sind. Dadurch, daß die elektrischen Kontakte auf seiten des Energiespeichers und/oder auf seiten des Steckers bei nicht hergestellter Steckverbindung für den Benutzer offenliegend und somit leicht zugänglich sind, kann von diesem eine nicht auszuschließende Verschmutzung leicht beseitigt werden. Eine solche Ausgestaltung ist sowohl für die Ausbildung der Kontaktflächen, als auch für die Ausbildung des Steckers und den Gegenkontakten jeweils getrennt realisierbar und für beide voneinander unabhängig vorteilhaft.

Vorteilhafte Ausführungsformen der Erfindung umfassen einen Energiespeicher, der eine Steckeraufnahme aufweist, die erfindungsgemäß ausgebildet ist. Ein solcher Energiespeicher ist insbesondere zur Aufnahme eines Steckers bestimmt, der über ein elektrisch leitendes Kabel mit einem elektrischen Verbraucher, insbesondere einem Gartengerät oder einem Haushaltsgerät verbunden ist. Ein solcher Energiespeicher besteht insbesondere aus einer Vielzahl von Akkumulatorzellen, die zueinander parallel und/oder in Serie geschaltet sind. Der elektrische Energiespeicher ist insbesondere so ausgebildet, daß er mittels eines Gürtels oder eines Tragegurts bequem vom Benutzer getragen werden kann ohne daß er in den Händen gehalten werden muß, Der Energiespeicher ist von seiner Speicherkapazität und damit auch der Anzahl und Ausbildung von Speicherzellen dahingehend ausgelegt, daß anschließbare elektrische Verbraucher über einen Zeitraum hinweg benutzt werden kann, die einer üblichen Nutzung des Gerätes entspricht. Beispiele für derartige elektrische Verbraucher, nämlich Gartengeräte, sind elektrische Randschneider, elektrische Heckenscheren und dergleichen. In Verbindung mit Haushaltsgeräten kann ein solcher elektrischer Energiespeicher in vielfältiger Weise verwendet werden. Er kann beispielsweise elektrischen Schneidmitteln, wie Elektromessern, elektrischen Tischstaubsaugern und anderen elektrisch arbeitenden Kleingeräten wie Elektroschraubern, elektrisch arbeitenden Momentenschlüsseln und anderen, im Haushalt benutzbaren Handwerkzeug verwendet werden.

Die vorstehenden und weiteren Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.
Im übrigen ist die Erfindung nachfolgend anhand der Zeichnungen näher erläutert; dabei zeigt:
- Fig. 1: einen rückwärtige Ansicht auf einen erfindungsgemäßen tragbaren Energiespeicher,
- Fig. 2: eine Seitenansicht des Energiespeichers mit Blick auf die Steckeraufnahme sowie die Kontaktflächen der Steckeraufnahme,
- Fig. 3: eine teilgeschnittene Darstellung des Energiespeichers mit einem in die Steckeraufnahme eingeführten Stecker sowie
- Fig. 4: einen Schnitt durch einen erfindungsgemäß ausgebildeten Energiespeicher mit einer erfindungsgemäßen Steckeraufnahme gemäß der Fig. 3.

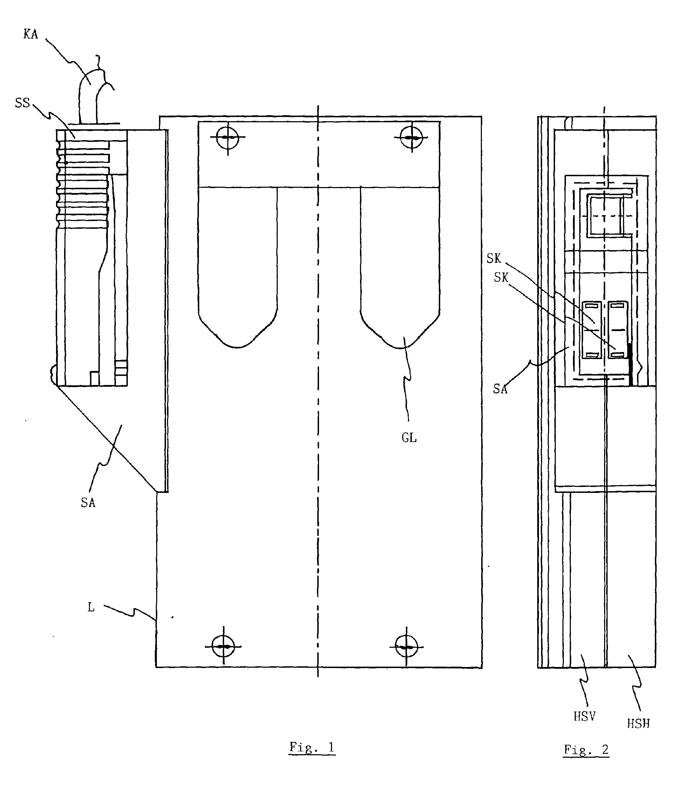

Die Fig. 1 zeigt eine Rückenansicht eines erfindungsgemäß ausgebildeten tragbaren Energiespeichers. Das Gehäuse des Energiespeichers zeigt vorteilhafter Weise eine flache, für hohen Tragekomfort durch eine Wölbung an den Körper angepaßte Form mit einer großen Frontfläche und einer großen Rückenfläche welche insbesondere an einer vorderen Halbschale HSV und einer hinteren Halbschale HSH ausgebildet sein können. Die Halbschalen stoßen dann an den die vorderen und hinteren Flächen verbindenden Schmalseiten des Gehäuses zusammen. Eine Steckeraufnahme SA in Form eines Steckerfußes ist an einer Schmalseite 11 des Speichergehäuses G ausgebildet. Ein mit einem elektrischen Verbraucher, insbesondere mit einem handgehaltenen elektromotorisch angetriebenen Gartengerät oder einem handgehaltenen elektromotorisch angetriebenen Haushaltsgerät ist über ein Kabel KA mit einem Stecker SS verbunden. Der Stecker SS ist komplementär zur Steckeraufnahme SA ausgebildet. Der Stecker kann dabei insbesondere Greifmittel GM aufweisen, die steckeraufnahmeseitig ausgebildete Führungsnuten FN umgreift. Dabei wird der Stecker SS dadurch am Gehäuse GE des Energiespeichers gehalten, daß die Greifmittel in die Führungsnut FN eingreifen. An dem Gehäuse GE des Energiespeichers sind vorteilhafterweise Vorrichtungen zum Befestigen eines Tragegurts TG und/oder Gürtellaschen GL zum Einhängen des Gehäuses GE in einen Gürtel oder Bund vorgesehen.

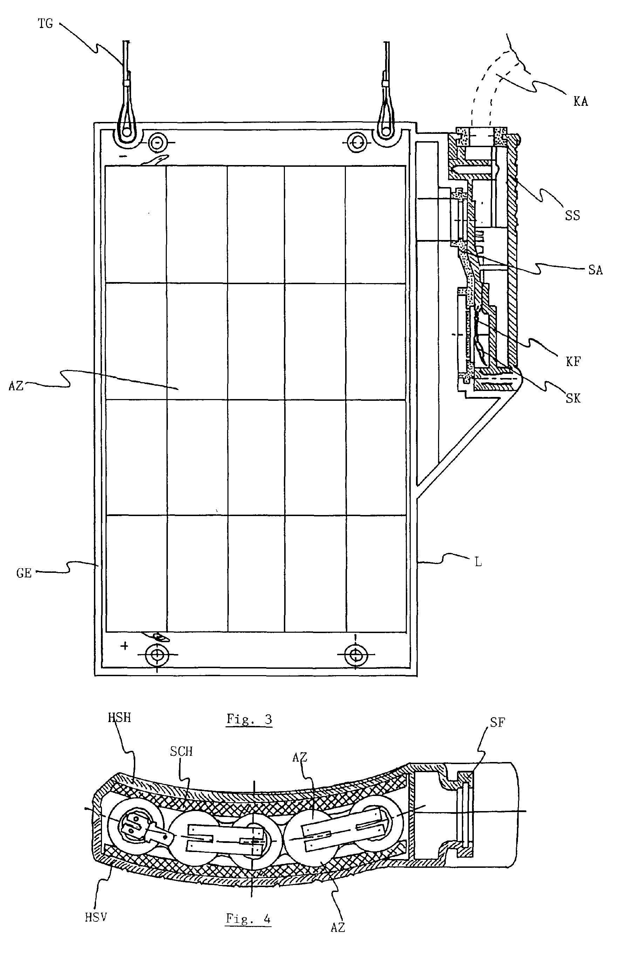

Wie aus der Fig. 2 und der teilgeschnittenen Darstellung in der Fig. 3 ersichtlich, sind zwischen den als steckeraufnahmeseitigen Führungsmittel dienenden Führungsnuten FN Kontaktflächen SK ausgebildet. Dabei sind die Kontaktflächen SK so ausgebildet, daß dann, wenn der Stecker in die Steckeraufnahme eingeführt wird, wofür eine Relativbewegung zwischen Steckeraufnahme und Stecker erforderlich ist, über ein Teilweg hinweg die Gegenkontakte KF des Steckers über die Kontaktfläche SK streichen.

Gemäß der dargestellten Ausführungsform sind die Kontaktflächen SK als am Steckerfuß nach außen offenliegende Kontaktflächen ausgebildet, die aus einem elektrisch leitenden Material, beispielsweise Kupfer, gebildet sind. Steckerseitig sind gemäß vorteilhafter Ausgestaltung der Erfindung die Gegenkontakte KF ebenfalls offenliegend ausgebildet, wobei es sich bei den Gegenkontakten KF vorzugsweise um Kontaktfedern aus einem ebenfalls elektrisch leitenden Material, beispielsweise ebenfalls aus Kupfer bzw. einer kupfherhaltigen Legierung gebildet sind. Zum Aufstecken des Steckers SS auf die Steckeraufnahme SA des Energiespeichers werden die Greifmittel GM in die Führungsnut FN eingeführt und der Stecker in einer Bewegung, die vom Gehäuse aus gesehen von oben nach unten führt und die parallel zur Erstreckung der Schmalseite verläuft, eingeführt. Hierbei gleiten die Gegenkontakte KF, die vorzugsweise als Kontaktfedern ausgebildet sind, während der Teilbewegung über die Kontaktflächen SK die zwischen dem Erreichen der ersten Kontaktiertung also an der Oberkante der Kontaktflächen SK durch den am weitesten vorstehenden Teil der Kontaktfedern bis zu dem Erreichen der Endlage besteht.

Durch die streifende Bewegung werden eventuell vorhandene Verschmutzungen im Regelfall beseitigt, so daß sich zuverlässig ein guter Kontakt zwischen den Gegenkontakten KF und den Kontaktflächen SK ergibt. Durch die Ausbildung der Steckeraufnahme SA an einer Schmalseite des Speichergehäuses und durch die Steckrichtung entlang dieser Schmalseite, vorzugsweise von oben nach unten, ergibt sich im zusammengesteckten Zustand eine besonders kompakte Form der Speicher-/ Steckerkombination. Dabei ragt das obere Ende des Steckers SS bei hergestellter Steckverbindung zwischen dem Stecker SS und der Steckeraufnahme SA vorzugsweise nicht über die Oberkante des Gehäuses GE hinaus.

Entgegen der in den Fig. 1 bis 4 dargestellten Ausführungsform kann das Kabel KA auch nach unten, also in Steckrichtung, aus dem Stecker SS hinausgeführt sein. Dadurch kann sichergestellt werden, daß kein Überstand des Kabels über die Oberkante von Stecker SS und Gehäuse GE vorliegt. Eine Knickstelle des Kabels am Steckerausgang oder Anknicken des Kabels im Bereich eines Überstandes wird ebenfalls verhindert. Auch eine Zugüberlastung beim Abziehen des Steckers durch Zug am Kabel ist durch eine solche Ausbildung zuverlässig verhindert.

Wie aus den Fig. 3 und 4 ersichtlich handelt es sich bei dem Energiespeicher vorteilhafterweise um eine Mehrzahl von einzelnen, parallel und/oder seriell verschalteten Speicherzellen AZ, beispielsweise vom Typ der Nickel-Cadmium-Akkumulatoren. Die Speicherzellen AZ sind zwischen der vorderen Halbschale HSV und der hinteren Halbschale HSH, die das Gehäuse GE bilden, angeordnet. Auf der Innenseite der beiden Gehäusehalbschalen HSV, HSH sind vorteilhafterweise Schaumstoffschichten SCH vorgesehen. Dadurch werden die Speicherzellen AZ innerhalb des Gehäuses GE so festgelegt, daß auch beim Tragen und bei Erschütterungen keine Geräuschentwicklung entsteht.

In der Schnittdarstellung der Fig. 4 ist an der einen Schmalseite die Steckaufnahme SA mit den an ihr ausgebildeten Führungsnut FN, die sich parallel zu der Schmalseite L erstreckt, zu erkennen. Die Führungsnut FN wird bei hergestellter Steckverbindung durch entsprechende Greifmittel GM umgriffen, so daß die Steckverbindung zwischen dem Stecker und der Steckeraufnahme und auch zwischen den Kontaktflächen SK und den Gegenkontakten KF allein durch Kraftschluß aufrecht erhalten wird. Es ist nicht notwendig, jedoch möglich, eine Verrastung zwischen dem Stecker SS und der Steckeraufnahme SA vorzusehen.

Ein erfindungsgemäß ausgebildeter und in den Fig. 1 bis 4 dargestellter tragbarer elektrischer Energiespeicher hat ein Gehäuse GE, in welchem eine Steckeraufnahme als erste Steckvorrichtung ausgebildet ist. Der Stecker, eine zweite Steckvorrichtung, ist an einem Kabel ausgebildet, das zu einem elektrischen Verbraucher führt. Die erste Steckvorrichtung ist mit der zweiten Steckvorrichtung zu einer elektrischen Verbindung zusammenfügbar. Dabei ist das Gehäuse als ein Gehäuse mit flacher Bauform, das eine großflächige Vorder- und Rückseite sowie gegenüber diesen kleinere Schmalseiten aufweist. Dabei ist die Steckeraufnahme, also die erste Steckvorrichtung, an einer der Schmalseiten des Gehäuses vorgesehen. Die erste und die zweite Steckvorrichtung sind so ausgebildet, daß für das Herstellen und/oder das Lösen der elektrischen Steckverbindung eine Relativbewegung der beiden Teile zueinander erforderlich ist, die ein Verschieben parallel zur Fläche der Schmalseite des Gehäuses ist.

Bei einem solchen tragbaren elektrischen Energiespeicher mit einem Gehäuse, das an dem eine erste Steckvorrichtung angeordnet ist und welche mit einer zweiten Steckvorrichtung an einem Kabel zu einer elektrischen Verbindung zusammenfügbar ist, können die Kontakte zwischen den Kontaktflächen der ersten Steckvorrichtung und den Gegenkontakten der zweiten Steckvorrichtung paarweise aneinanderliegen und bei der Herstellunng der elektrischen Verbindung aneinander entlanggleiten, bevor die endgültige Kontaktposition, durch Erreichen der Endlage der zweiten Steckvorrichtung relativ zur ersten Steckvorrichtung erreicht wird.

## Patentansprüche

1. Elektrische Steckverbindung für tragbare elektrische Energiespeicher, insbesondere für Energiespeicher von Haushalts- und Gartengeräten, wobei der Energiespeicher in einem Gehäuse angeordnet ist, das Schmalseiten (L) aufweist, wobei an einer Schmalseite (L) eine Steckeraufnahme (SA) zur Aufnahme eines Steckers (SS) ausgebildet ist, die vertikal ausgerichtete Führungsmittel zum Anbringen des Steckers (SS) aufweist, wobei im Bereich der Führungsmittel Kontaktflächen (SK) zur elektrischen Kontaktierung des Energiespeichers mit dem Stecker (SS) ausgebildet sind, wobei an dem Stecker (SS) den Führungsmitteln negativ entsprechende Greifmittel ausgebildet sind, mittels derer der Stecker (SS) in einer Kontaktstellung bezüglich dem Gehäuse festlegbar ist, wobei steckerseitig Gegenkontakte ausgebildet sind, die in der Kontaktstellung des Steckers (SS) eine elektrische Verbindung zu den Kontaktflächen herstellen.

2. Elektrische Steckverbindung nach Anspruch 1, **dadurch gekennzeichnet, daß** für das Herstellen der Kontaktstellung des Steckers (SS) an dem Gehäuse eine Relativbewegung zwischen Gehäuse und Stecker (SS) erforderlich ist, wobei wenigstens über einen Teilweg der Relativbewegung die Gegenkontakte über die Kontaktflächen (SK) schleifen.

3. Elektrische Steckverbindung nach Anspruch 2, **dadurch gekennzeichnet, daß** die Relativbewegung wenigstens näherungsweise in Richtung der Längsachse der Schmalseite (L) ausgerichtet ist.

4. Elektrische Steckverbindung nach einem der vorhergehenden Ansprüche, **dadurch gekennzeichnet, daß** die Führungsmittel als beidseitig der Kontaktflächen (SK) insbesondere parallel zu diesen verlaufende Führungsnuten (FN) in einer von der Schmalseite (L) abragenden Seitenwand ausgebildet sind, wobei die Greifmittel (GM) die Führungsnut (FN) hintergreifende, parallel zu den Gegenkontakte ausgerichtete Gleitflächen sind.

5. Elektrische Steckverbindung nach Anspruch 4, **dadurch gekennzeichnet, daß** die Steckverbindung zwischen Stecker (SS) und Steckeraufnahme durch Kraftschluß aufrechterhalten wird.

6. Elektrische Steckverbindung nach einem der Ansprüche 2 bis 5, **dadurch gekennzeichnet, daß** die Steckverbindung durch ein Einführen des Steckers (SS) von oben nach unten in die Steckeraufnahme erfolgt.

7. Elektrische Steckverbindung nach einem der vorhergehenden Ansprüche, **dadurch gekennzeichnet, daß** von dem Stecker (SS) ein Kabel (KA) zu einem elektrischen Verbraucher führt, wobei das Kabel (KA) in der Richtung aus dem Stecker (SS) herausgeführt ist, in der zum Herstellen der Steckverbindung der Stecker (SS) in die Steckeraufnahme einzuführen ist.

8. Elektrische Steckverbindung nach einem der vorhergehenden Ansprüche, **dadurch gekennzeichnet, daß** die Kontaktflächen (SK) der Steckverbindung bei nicht eingeführtem Stecker (SS) nach außen hin freiliegend, insbesondere frei zugänglich sind.

9. Elektrische Steckverbindung nach einem der vorhergehenden Ansprüche, **dadurch gekennzeichnet, daß** die Gegenkontakte des Steckers (SS) bei nicht hergestellter Steckverbindung nach außen hin freiliegend, insbesondere frei zugänglich sind.

10. Elektrischer Energiespeicher mit einer Steckeraufnahme insbesondere nach einem der vorhergehen Patentansprüche, **dadurch gekennzeichnet, daß** an den Energiespeicher ein elektrischer Verbraucher anschließbar ist, wobei der elektrische Verbraucher insbesondere ein Gartengerät ist.
